Europäisches Patentamt

European Patent Office

Office européen des brevets

(19)

(11) Numéro de publication : **0 446 102 A1**

(12)

# DEMANDE DE BREVET EUROPEEN

(21) Numéro de dépôt : **91400539.2**

(51) Int. Cl.⁵ : **G03B 42/02, A61B 6/00**

(22) Date de dépôt : **27.02.91**

(30) Priorité : 08.03.90 FR 9002932

(43) Date de publication de la demande :
**11.09.91 Bulletin 91/37**

(84) Etats contractants désignés :
**DE GB IT NL**

(71) Demandeur : **GENERAL ELECTRIC CGR S.A.
100, rue Camille-Desmoulins
F-92130 Issy les Moulineaux (FR)**

(72) Inventeur : **Fajac, Claude
Cabinet Ballot-Schmit, 7, rue le Sueur
F-75116 Paris (FR)**

(74) Mandataire : **Ballot, Paul Denis Jacques et al
Cabinet Ballot-Schmit 7, rue le Sueur
F-75116 Paris (FR)**

(54) **Dispositif de mise en place de cassettes pour mammographes.**

(57)      L'invention concerne les appareils de radiologie.
        L'invention réside dans le fait que le dispositif comporte un chariot mobile (21) sur lequel s'articulent deux leviers (25) et (26) ayant des mouvements conjugués grâce à un système d'engrènement (31).
        Les mouvements des leviers (25) et (26) sont guidés par au moins une rainure (42) tracée dans un plateau (20) avec laquelle coopère un ergot (47) fixé au levier (25). La rainure (42) comporte au moins deux parties rectilignes espacées qui correspondent chacune à un format différent de la cassette (18), ce qui permet le déplacement de cette dernière.

# FIG. 2

# DISPOSITIF DE MISE EN PLACE DE CASSETTES POUR MAMMOGRAPHES

L'invention concerne les appareils de mammographie et, plus particulièrement dans de tels appareils les dispositifs qui permettent de mettre en place la cassette contenant le film radiographique sur son support quel que soit le format de la cassette.

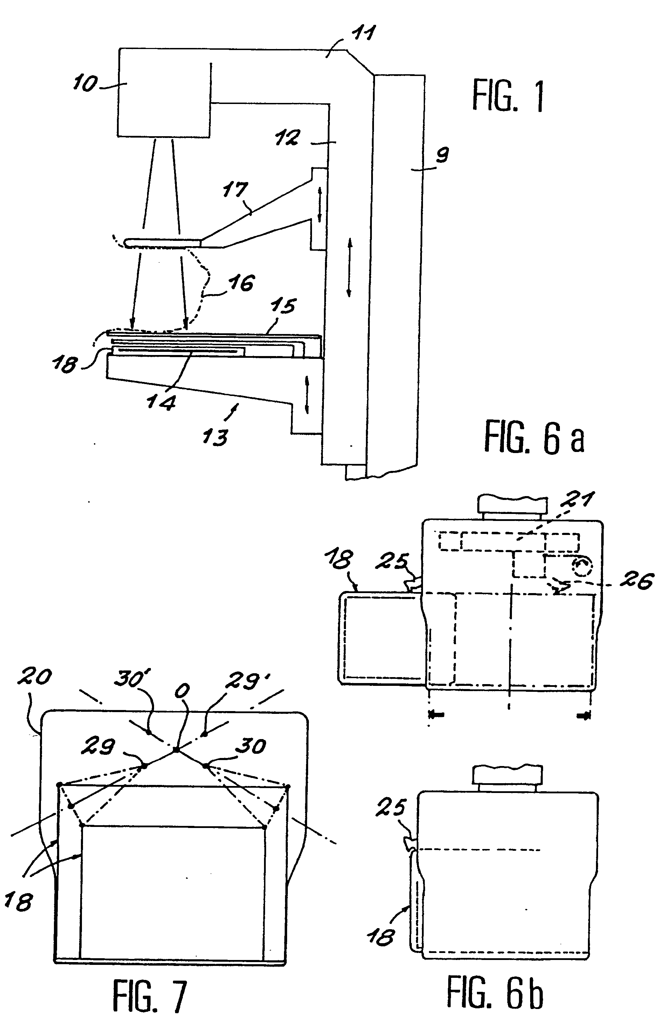

Les systèmes de radiologie du type mammographe comprennent, comme le montre la figure 1, une source 10 de rayonnement X portée par une potence 11 disposée au sommet d'une plaque verticale 12. Cette dernière comporte un ensemble 13 sur lequel repose le sein 16 à examiner par l'intermédiaire d'une tablette horizontale 15. Une pelote 17, transparente au rayonnement X et mobile verticalement sur la plaque 12, sert à comprimer le sein.

Pour s'adapter à la taille de la patiente, la plaque 12 est montée sur une colonne verticale 9 reposant sur le sol et se déplace verticalement sur ladite colonne grâce à un dispositif mécanique approprié.

L'ensemble 13 présente, sur sa partie supérieure et sous la tablette 15, un tunnel dans lequel vient se loger un dispositif destiné à accepter une cassette 18. Cette cassette est constituée d'une boîte noire renfermant au moins un film 14 sensible au rayonnement X. C'est sur le film que se forme l'image latente du sein après une durée de pose appropriée; le développement du film donne un cliché radiographique.

Le dispositif contenant la cassette, appelé support de cassette, est un élément amovible que l'on glisse dans le tunnel avant la pose et dans lequel on introduit la cassette. Les films sensibles ont des dimensions normalisées, par exemple 18 cm x 24 cm ou 24 cm x 30 cm, et il en est de même des cassettes qui sont prévues pour les contenir ainsi que des supports de cassette.

Pour passer d'une cassette de dimensions données à une autre ayant des dimensions différentes, il faut habituellement changer en même temps le support de cassette. Il est donc en général prévu un support de cassette adapté aux dimensions de la cassette et qui constitue en quelque sorte un dispositif adaptateur qui est associé à chaque type de cassette. Il en résulte alors un coût supplémentaire lorsqu'on souhaite utiliser un mammographe pour toutes les dimensions habituelles des cassettes ainsi que la manipulation d'éléments encombrants tels que le support de cassette pendant l'examen.

Un but de la présente invention est donc de réaliser un dispositif de mise en place de cassettes qui s'adapte aux différentes dimensions de cassettes qui sont utilisées dans ce domaine.

De tels dispositifs sont connus et l'un d'entre eux est décrit dans la demande de brevet français n° 89 05666 déposée le 28 avril 1989.

Ce dispositif de l'art antérieur présente l'inconvénient d'être compliqué et donc d'être d'un coût relativement élevé.

Un autre but de la présente invention est donc de réaliser un dispositif de mise en place de cassette pour mammographes qui soit de réalisation simple et de faible coût.

L'invention concerne un dispositif de mise en place de cassettes de formats différents sur un plateau caractérisé en ce qu'il comprend :

– un chariot qui peut se déplacer parallèlement par rapport au sens d'introduction de la cassette sur ledit plateau,

– deux leviers mobiles en rotation, portés par ledit chariot et dont les mouvements de rotation sont conjugués, les extrémités desdits leviers étant prévues pour agripper de manière élastique deux coins de la cassette,

– au moins une première rainure tracée sur ledit plateau,

– au moins un premier ergot solidaire d'un des deux leviers qui coopère avec ladite première rainure,

le tracé de ladite première rainure étant prévu de manière à permettre d'une part, la rotation desdits leviers pour adapter leur ouverture aux dimensions de la cassette et, d'autre part, le déplacement de la cassette sur ledit plateau.

Afin de ramener les leviers en position de serrage de la cassette, ils sont munis d'un ressort de traction.

Afin d'imposer une séquence de mise en place des cassettes, le dispositif comprend en outre :

– une deuxième rainure tracée sur le chariot

– un deuxième ergot porté par un des deux leviers tournants qui est mobile sur ledit levier et qui coopère avec ladite deuxième rainure,

ladite deuxième rainure étant du type labyrinthe et étant prévue pour imposer une séquence d'ouverture desdits leviers.

D'autres buts, caractéristiques et avantages de la présente invention apparaîtront à la lecture de la description suivante d'un exemple particulier de réalisation, ladite description étant faite avec les dessins joints dans lesquels :

– la figure 1 est une vue en coupe schématique d'un mammographe;

– la figure 2 est une vue éclatée en perspective cavalière d'un mode de réalisation d'un dispositif de mise en place de cassettes selon l'invention,

– les figures 3, 4 et 5 sont des vues partielles du dispositif selon l'invention qui permettent de comprendre le fonctionnement dudit dispositif,

– les figures 6-a et 6-b sont des vues schématiques montrant la mise en place d'une cassette dans le dispositif selon l'invention, et

– la figure 7 est une vue schématique montrant les positions possibles des axes de rotation des leviers.

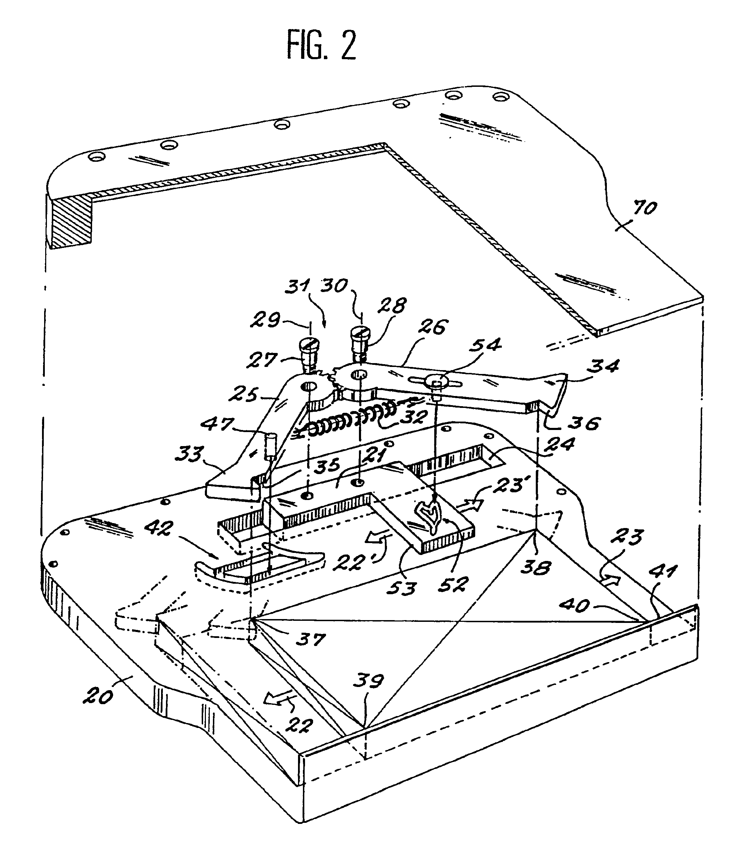

La figure 1 montrant les éléments principaux d'un appareil de mammographie ne sera pas décrite à nouveau. Comme le montre la vue éclatée, couvercle 70 enlevé, en perspective cavalière de la figure 2, le dispositif selon l'invention de mise en place sur un plateau 20 de cassettes 18 comprend un chariot 21 qui est mobile et se déplace parallèlement aux flèches parallèles 22 et 23 qui représentent les sens d'introduction et de sortie de la cassette 18. Pour permettre ce déplacement du chariot 21, le plateau 20 comporte une ouverture 24 qui permet la liaison du chariot 21 à des moyens d'entraînement en translation non représentés.

Le chariot 21 sert de support à deux leviers 25 et 26 de même longueur qui sont montés sur ledit support par l'intermédiaire des éléments 27 et 28 de manière à permettre leur rotation autour d'axes 29 et 30. Les mouvements de rotation des leviers 25 et 26 sont asservis ou conjugués entre eux par un système d'engrènement 31 de telle sorte qu'à la rotation de l'un correspond une rotation d'égale amplitude de l'autre en sens inverse. Un ressort de traction 32, dont les extrémités sont reliées chacune à un levier, tend à refermer ces deux leviers l'un vers l'autre pour réduire leur angle d'ouverture.

Les extrémités 33 et 34 des leviers 25 et 26 sont munies respectivement chacune d'une encoche 35 et 36 dans laquelle vient se loger l'un (37 ou 38) des quatre coins 37,38,39,40 de la cassette 18, les deux autres coins 39 et 40 venant en butée sur la face avant 41 du plateau 20.

Un des leviers, par exemple le levier 25, porte un ergot fixe 47 dont l'extrémité inférieure coopère avec une rainure 42 du plateau 20.

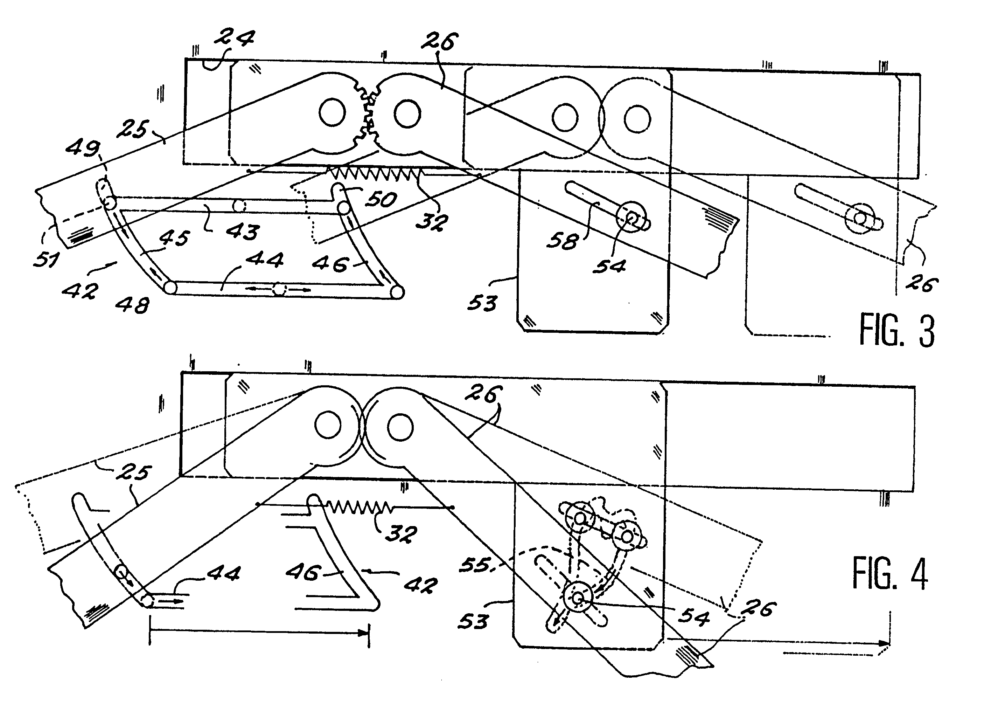

Cette première rainure 42 est tracée dans l'épaisseur du plateau 20 et a la forme générale d'un parallélogramme (figure 3) dont deux (43,44) des côtés, parallèles entre eux et à la direction des flèches 22, 23, sont rectilignes tandis que les deux autres (45,46) sont des arcs de cercle de rayon égal à la distance entre l'axe 29 et l'ergot 47. Les axes de cercle 45 et 46 présentent des prolongements 49 et 50.

Le dispositif qui vient d'être décrit et qui ne comporte qu'une seule rainure 42 fonctionne de la manière suivante. En position de repos, le chariot 21 est en bout de course d'un côté ou de l'autre du plateau 20, par exemple complètement à gauche (figure 6-a). Dans cette position, l'ergot 47 est dans le coin inférieur gauche 48 de la première rainure 42 et l'extrémité 33 du levier 25 est en position basse. Pour mettre en place une cassette 18, il suffit de soulever l'extrémité 33 du levier 25 dont l'ergot 47 coulisse dans la partie 45 en arc de cercle.

Dans le cas d'une grande cassette, l'ergot 47 s'engage dans le prolongement 49 mais revient en position 51 lorsque la cassette 18 est en place. Dans les positions 48 (petite cassette) et 51 (grande cassette), l'ergot 47 peut coulisser dans les parties de rainure 43 et 44, ce qui permet le déplacement latéral du chariot 21 et donc de la cassette 18 par rapport au plateau 20 de manière à la mettre dans la position requise.

Il est clair que l'ergot 47 pourrait être porté par l'autre levier 26 de manière à coopérer avec une autre rainure semblable à la rainure 42 et disposée sur la droite du plateau 20 par rapport aux axes de rotation 29,30 des leviers 25,26.

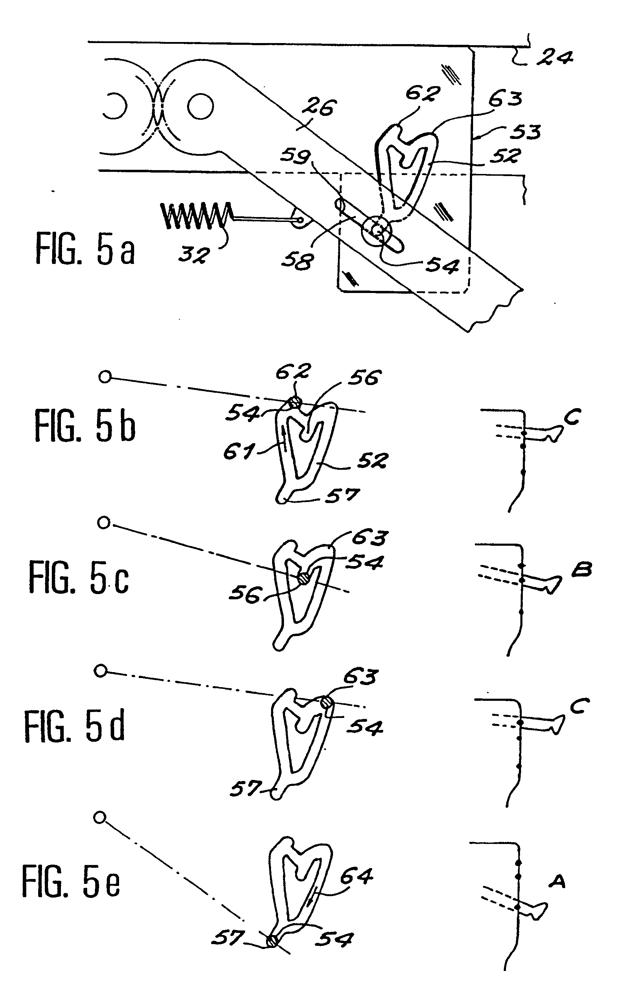

Selon une autre caractéristique de l'invention, le dispositif de mise en place de cassettes comprend une deuxième rainure 52 tracée sur une extension 53 du chariot 21 et coopèrent avec un deuxième ergot 54 qui est monté mobile en translation sur le bras 26 grâce à une fente 58 de coulissement dans le cas où le premier ergot 47 est monté sur le bras 25. Cette rainure 52 est du type labyrinthe car elle ne peut être parcourue par l'ergot 54 que dans un seul sens, celui indiqué par la flèche 55 (figure 4). Pour qu'il en soit ainsi, la rainure 52 comporte des chicanes 56 et 57 (figure 5) correspondant l'une 56 à la grande cassette et l'autre 57 à la petite cassette.

Afin d'empêcher l'ergot 54 de glisser par gravité dans le fente 58 quand le dispositif est utilisé verticalement pour une prise de vue axillaire, il est prévu un système élastique de freinage (non représenté) du mouvement de l'ergot 54 dans la fente 58 de coulissement. Ce système élastique est par exemple réalisé à l'aide d'une lame élastique qui exerce une force sur l'ergot 54 tendant à le ramener vers l'extrémité 59 de la fente 58.

Les figures 4 et 5 montrent le fonctionnement du dispositif de mise en place de cassettes comportant la rainure 52.

La position de repos est par exemple celle correspondant à la figure 5-a, le levier 26 étant en position A et l'ergot 54 étant au fond de la chicane 57. Cette position est une position de repos avec ou sans la présence d'une petite cassette.

Pour introduire une cassette de grandes dimensions, il faut soulever le levier 26 en direction de la position C. Dans ce mouvement, l'ergot 54 suit le trajet 61 de la rainure 52 jusqu'à la butée 62 (figure 5-b). Dès que le levier 26 est relâché, l'ergot 54 vient dans la chicane 56, ce qui correspond à la position B (figure 5-c). Dans cette position B, la grande cassette est introduite sur le plateau 20 par un soulèvement de faible amplitude des leviers 25 et 26; ces leviers se referment en fin de course de la cassette par l'action du ressort 32. Pour retirer la grande cassette, il faut soulever légèrement le levier 25 ou 26.

Pour introduire une petite cassette, il faut soulever le levier 25 ou 26 (position C de la figure 5-d) de sorte que l'ergot 54 vient en butée 63 puis le relâcher de sorte que l'ergot 64 suit le trajet 64 pour aboutir en butée dans la chicane 57 (position A de la figure 5-e). La petite cassette peut alors être introduite par un soulèvement de faible amplitude des leviers 25 et 26 qui se referment sur celle-ci par l'action du ressort 32.

Avec une telle rainure 52, la séquence de manoeuvre des positions du levier 26 est toujours la suivante : A puis C, puis B puis C et retour à A.

Le dispositif qui a été décrit comporte deux leviers 25 et 26 qui tournent respectivement autour des axes séparés 29 et 30. Cependant, le dispositif de l'invention peut aussi être réalisé à l'aide de deux leviers qui tourneraient autour d'un axe unique passant par le point 0 du schéma de la figure 7. Il peut aussi être réalisé à l'aide de deux leviers qui se croiseraient et viendraient tourner autour d'axes passant par les points 29' et 30' (figure 7).

Le dispositif qui a été décrit est prévu pour deux formats de cassettes mais il peut être aisément modifié pour accommoder un troisième format de cassette. Dans ce cas, il faudrait ajouter un trajet supplémentaire dans la première rainure et une chicane supplémentaire dans la deuxième rainure.

Dans le dispositif décrit, la cassette prend appui sur le rebord 41 du plateau 20 et sur les encoches 35 et 36. Il est possible d'améliorer le maintien de la cassette du côté des leviers 25 et 26 en ajoutant un système de tringles coulissantes entre lesdits leviers 25 et 26.

**Revendications**

1. Dispositif de mise en place de cassettes (18) de formats différents sur un plateau (20) caractérisé en ce qu'il comprend :
   – un chariot (21) qui peut se déplacer parallèlement par rapport au sens d'introduction de la cassette sur ledit plateau,
   – deux leviers (25,26), mobiles en rotation, portés par ledit chariot (21) et dont les mouvements de rotation sont conjugués, les extrémités desdits leviers (25,26) étant prévues pour agripper de manière élastique deux coins de la cassette (18),
   – au moins une première rainure (42) tracée sur ledit plateau (20),
   – au moins un premier ergot (47) solidaire d'un des deux leviers (25,26) qui coopère avec ladite première rainure (42),
   – le tracé de ladite première rainure (42) étant prévue de manière à permettre d'une part, la rotation desdits leviers (25,26) pour adapter leur ouverture aux dimensions de la cassette (18) et, d'autre part, le déplacement de la cassette (18) sur ledit plateau (20).

2. Dispositif de mise en place de cassettes selon la revendication 1, caractérisé en ce que les deux leviers (25,26) sont munis d'un système élastique (32) qui a tendance à les ramener l'un vers l'autre.

3. Dispositif de mise en place de cassettes selon la revendication 2, caractérisé en ce que le système élastique est constitué par un ressort (32) travaillant en traction qui relie lesdits leviers.

4. Dispositif de mise en place de cassettes selon l'une quelconque des revendications précédentes, caractérisé en ce qu'il comprend en outre :
   – une deuxième rainure (52) tracée sur le chariot (21),
   – un deuxième ergot (54) porté par un des deux leviers tournants qui est mobile sur ledit levier qui coopère avec ladite deuxième rainure (52),
   ladite deuxième rainure (52) étant du type labyrinthe et étant prévue pour imposer une séquence d'ouverture desdits leviers (25,26).

5. Dispositif de mise en place de cassettes selon la revendication 4, caractérisé en ce que le levier (26) de support du deuxième ergot (54) comporte une fente (58) pour le déplacement dudit ergot (54).

6. Dispositif de mise en place de cassettes selon la revendication 4 ou 5, caractérisé en ce que le deuxième ergot (54) est muni d'un système élastique de freinage.

7. Dispositif de mise en place de cassettes selon l'une quelconque des revendications précédentes 1 à 6, caractérisé en ce que les deux leviers (25,26) pivotent autour d'un même axe de manière inverse conjuguée.

8. Dispositif de mise en place de cassettes selon l'une quelconque des revendications précédentes 1 à 6 caractérisé en ce que les deux leviers (25,26) pivotent autour de deux axes (29,30) de manière inverse conjuguée.

9. Dispositif de mise en place de cassettes selon la revendication 8, caractérisé en ce que les positions des deux axes de rotation (29',30') des leviers (25,26) sont telles que les deux leviers se croisent.

10. Dispositif de mise en place de cassettes selon l'une quelconque des revendications précédentes, caractérisé en ce que les extrémités (33,34) des leviers (25,26) sont connectées par un système de tringles coulissantes qui sert d'appui à un des bords de la cassette (18).

FIG. 1

FIG. 6 a

FIG. 7

FIG. 6 b

# FIG. 2

FIG. 3

FIG. 4

8

FIG. 5 a

FIG. 5 b

FIG. 5 c

FIG. 5 d

FIG. 5 e

Office européen des brevets

# RAPPORT DE RECHERCHE EUROPEENNE

Numero de la demande

EP 91 40 0539

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|---------------------------------------------------------------------------------|-------------------------|---------------------------------------|
| A | US-A-3 968 375 (L.F. PEYSER) * Colonnes 3-5; figures 1-8 * --- | 1-3,8 | G 03 B 42/02 A 61 B 6/00 |
| A | US-A-3 792 283 (J. LEBRA) * Colonnes 1,2; figures 1-3 * --- | 1-3,10 | |
| A | US-A-3 826 922 (W.R. INGLES) * Colonnes 2-4; figures 1-6 * --- | 1-3,8 | |
| A | US-A-3 920 997 (J. MUNCH) * Colonnes 2-4; figures 1-5 * ----- | 1-3,10 | |

DOMAINES TECHNIQUES RECHERCHES (Int. Cl.5)

G 03 B 42/02
A 61 B 6/00

Le présent rapport a été établi pour toutes les revendications

| Lieu de la recherche | Date d'achèvement de la recherche | Examinateur |
|----------------------|-----------------------------------|-------------|
| LA HAYE | 10-05-1991 | BOEYKENS J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................
& : membre de la même famille, document correspondant

EPO FORM 1503 03.82 (P0402)